# EUROPÄISCHE PATENTANMELDUNG

(11) **EP 3 647 241 A1**
(43) Veröffentlichungstag der Anmeldung: **06.05.2020**
(21) Anmeldenummer: 19204952.6
(22) Anmeldetag: 23.10.2019
(51) Int. Cl.: B65G 69/18

(54) **SPRÜHNEBELVORRICHTUNG MIT SCHUTZVORHANG**

(30) Priorität: 31.10.2018 DE 102018127218
(71) Anmelder: Nebolex Umwelttechnik GmbH, 55481 Kirchberg/Hunsrücl (DE)
(72) Erfinder: Hosse, Uwe, 55483 Hirschfeld (DE)
(74) Vertreter: Blumbach · Zinngrebe Patentanwälte PartG mbB

(57) **Zusammenfassung**

Die vorliegende Erfindung betrifft eine Sprühnebelvorrichtung (1) zum Niederschlagen von Staub, der bei fallenden Materialströmen insbesondere bei Bandabwürfen und Rutschen entsteht, wobei die Sprühnebelvorrichtung wenigstens eine Sprühnebeleinheit (2) aufweist. Diese Sprühnebeleinheit umfasst wenigstens einen Druckleitungsanschluss für eine Druckleitung (3) zum Verbinden mit einer Fluidzufuhreinrichtung und wenigstens eine Düse (4) mit einem Düsenkopf (5) und einem an diesem angeordneten Düsenausgang (6), wobei der Düse wenigstens ein flüssiges und/ oder gasförmiges Fluid über den Druckleitungsanschluss zugeführt werden kann. Zudem weist die erfindungsgemäße Sprühnebelvorrichtung einen Rahmen (7) und einen an dem Rahmen hängend angebrachten Schutzvorhang (8) auf. Dieser Schutzvorhang ist zumindest im Betrieb der Sprühnebelvorrichtung von dem Rahmen aus im Wesentlichen in Richtung des durch den Rahmen fallenden Schüttguts ausgerichtet und umgibt das fallende Schüttgut im Betrieb der Sprühnebelvorrichtung in dessen Umfangsrichtung vollständig oder zumindest teilweise. Zudem ist die Sprühnebeleinheit in den Schutzvorhang eingebaut und/oder der Schutzvorhang ist aus einem flexiblen, biegsamen Material hergestellt.

## Beschreibung

### Beschreibung

Die vorliegende Erfindung betrifft eine Sprühnebelvorrichtung, insbesondere zum Niederschlagen von Staub, der bei fallenden Materialströmen insbesondere bei Bandabwürfen und Rutschen entsteht.

Bekanntermaßen entsteht beispielsweise bei der Förderung von gebrochenem Schüttgut über Förderbänder und Rutschen u. a. Staub, wenn das Schüttgut von dem Förderband oder der Rutsche abgeworfen wird. Das Entweichen von Staub in die Umgebung wird durch auftretenden Wind in Abhängigkeit von der Windgeschwindigkeit noch verstärkt. Gemäß dem Stand der Technik kann daher gewöhnlich eine Sprühnebelvorrichtung zum Einsatz kommen, welche das von Förderbändern oder Rutschen fallende Schüttgut mit Hilfe von einer oder mehrerer Düsen nebelartig besprüht, in der Regel mit einer Mischung aus Wasser und Druckluft. Oftmals werden bei Sprühnebelvorrichtungen auch ein flüssiges Fluid mit einem gasförmigen Fluid gemischt, bevor der Sprühnebel aus der Düse austritt. Wenn ein gasförmiges Fluid und ein flüssiges Fluid innerhalb der Düse gemischt werden, so wird die Düse als Mischdüse bezeichnet. Das fallende Schüttgut wird häufig auch direkt auf Laster oder in offene Güterwagen geladen, wobei dort eine nebelartige Besprühung besonders geeignet ist. Insbesondere bei dem Auftreffen des Schüttguts beispielsweise auf die Ladefläche eines Lasters oder Güterwagens bzw. auf weiteres bereits auf einer Ladefläche liegendes Schüttgut entsteht vermehrt Staub, der durch Wind leicht aufgewirbelt und in die Umgebung entweichen werden kann. Der entweichende Staub kann für die in naher Umgebung zur Abladestelle arbeitenden Personen infolge einer Inkorporation über die Atemwege zu einer gesundheitlichen Schädigung führen. Während größere Staubpartikel mit einem Durchmesser größer als 10 µm größtenteils an den Nasenhärchen oder den Schleimhäuten des Nasen-Rachenraums hängen bleiben, können kleinere und kleinste Staubpartikel aber über die Luftröhre und die Bronchien bis tief in die Lunge vordringen. Im Falle einer dauerhaften Belastung der Atemwege durch Staub können schwerwiegende Krankheiten die Folge sein, insbesondere wenn es sich bei dem Staub beispielsweise um Quarz, Zementstaub, Mineralwolle oder Asbest handelt, welche auch zu chronischen Krankheitsbildern führen können. So gehören beispielsweise durch Quarz und Asbest verursachte Lungenkrankheiten zu häufig anerkannten und entschädigungspflichtigen Berufskrankheiten in Deutschland. Darüber hinaus können auch grobe Materialsplitter beim Auftreffen des Schüttguts auf einen Untergrund zurückgestoßen werden bzw. von diesem Untergrund abprallen, als Wurfgeschosse in die Umgebung entweichen und die in naher Umgebung zur Abladestelle arbeitenden Personen verletzen sowie die in naher Umgebung arbeitenden Maschinen beschädigen.

Die EP 0 950 796 B1 verfolgt neben der Staubbekämpfung u.a. das Ziel, die Beschädigung von Düsen, welche in der EP 0 950 796 B1 als Mischdüsen ausgebildet sind und üblicherweise in der Nähe der Staubentstehungsstelle, wie z. B. in der Nähe der Brechwerkzeuge von Abbruchvorrichtungen, angeordnet sind, zu vermeiden. Zu diesem Zweck wird eine Panzerung offenbart, welche die Mischdüsen umgibt und dadurch Schutz vor äußeren, mechanisch einwirkenden Gefahren bietet. Diese Panzerung soll die Mischdüsen schützen, sowie insbesondere bei den Brecharbeiten auftretende Stöße durch Materialsplitter u.ä. absorbieren bzw. an die tragende Konstruktion weiterleiten, an der die gesamte Sprühnebeleinheit einschließlich der Panzerung angebracht ist. Eine derartige Panzerung um eine Mischdüse kann jedoch aufwendig herzustellen sein und muss bei Beschädigung stets als Ganzes ausgetauscht werden, was zeit- und kostenintensiv ist.

Ausgehend von dem eingangs genannten Stand der Technik ist es daher eine Aufgabe der vorliegenden Erfindung, eine nochmals wesentlich verbesserte Sprühnebelvorrichtung mit einer Sprühnebeleinheit und wenigstens einer daran angebrachten Düse zum Besprühen des von Förderbändern oder Rutschen fallenden Schüttguts herzustellen. Diese soll insbesondere einerseits einen gegenüber dem Stand der Technik verbesserten Schutz vor Wind und folglich vor in die Umgebung entweichendem Staub sowie in die Umgebung entweichenden Materialsplittern, Materialbrocken u.ä. gewährleisten und dadurch die oben genannten Gefahren für die in naher Umgebung zur Abwurfstelle des Schüttguts arbeitenden Personen und Maschinen deutlich minimiert, und insbesondere andererseits einen im Vergleich zum derzeitigen Stand der Technik verbesserten und in ökonomischer Hinsicht effizienteren Schutz der gesamten Sprühnebelvorrichtung vor Beschädigung durch äußere mechanisch einwirkende Gefahren bieten. Weiterhin ist es insbesondere eine Aufgabe der vorliegenden Erfindung, eine Sprühnebelvorrichtung mit einer Sprühnebeleinheit und wenigstens einer daran angebrachten Düse zum Besprühen des von Förderbändern oder Rutschen fallenden Schüttguts herzustellen, welche die mindestens eine Düse vor Beschädigung durch äußere mechanisch einwirkende Gefahren sowie durch Materialsplitter, grobe Materialbrocken, u.ä. schützt. Dabei bezeichnet eine Sprühnebeleinheit diejenige Einheit einer Sprühnebelvorrichtung, an bzw. in der eine oder mehrere Düsen oder auch Mischdüsen angebracht, d. h. fixiert sind.

Diese Aufgabe wird insbesondere durch eine Sprühnebelvorrichtung mit den Merkmalen eines der unabhängigen Anspruche gelöst und durch die weiteren Merkmale der Unteransprüche ausgestaltet und weiterentwickelt.

Die erfindungsgemäße Sprühnebelvorrichtung weist wenigstens eine Sprühnebeleinheit auf. Die Sprühnebeleinheit wiederum umfasst wenigstens einen Druckleitungsanschluss für eine Druckleitung zum Verbinden mit einer Fluidzufuhreinrichtung und wenigstens eine Düse mit einem Düsenkopf und einem an diesem angeordneten Düsenausgang, wobei der Düse wenigstens ein flüssiges und/ oder gasförmiges Fluid über den Druckleitungsanschluss zugeführt werden kann. Zudem weist die erfindungsgemäße Sprühnebelvorrichtung einen Rahmen und einen an dem Rahmen hängend angebrachten Schutzvorhang auf. Dieser Schutzvorhang ist zumindest im Betrieb der Sprühnebelvorrichtung von dem Rahmen aus im Wesentlichen in Richtung des durch den Rahmen fallenden Schüttguts ausgerichtet und umgibt das fallende Schüttgut im Betrieb der Sprühnebelvorrichtung in dessen Umfangsrichtung vollständig oder zumindest teilweise. Zudem ist die Sprühnebeleinheit in den Schutzvorhang eingebaut und/oder der Schutzvorhang ist aus einem flexiblen, biegsamen Material hergestellt.

Die erfindungsgemäße Sprühnebelvorrichtung hat gegenüber dem Stand der Technik den entscheidenden Vorteil, dass der Schutzvorhang den im Betrieb der Sprühnebelvorrichtung entstehenden Staub sowie auch die im Betrieb der Sprühnebelvorrichtung entstehenden Materialsplitter und groben Materialbrocken insbesondere bei Wind sehr gut in dem Bereich, in dem das fallende Schüttgut von der mindestens einen Düse der Sprühnebeleinheit besprüht wird, nach außen hin abschirmt. Zum einen wird das Entweichen von gesundheitsschädlichem Staub und insbesondere auch von Materialsplittern sowie groben Materialbrocken verhindert und somit die arbeitenden Personen sowie Maschinen bzw. Maschinenteile im näheren Umfeld der Sprühnebelvorrichtung geschützt. Zum anderen schützt ein derartiger Schutzvorhang auch die gesamte Sprühnebelvorrichtung, und im Falle einer in den Schutzvorhang eingebauten Sprühnebeleinheit insbesondere auch die Sprühnebeleinheit, vor deren Beschädigung durch Materialsplitter, grobe Materialbrocken u.ä.. Im Falle eines Schutzvorhangs, der aus einem flexiblen, biegsamen Material, insbesondere einem Gummimaterial, hergestellt ist, verbessert sich der Schutz der Sprühnebelvorrichtung durch Beschädigung von äußeren, mechanisch einwirkenden Gefahren sogar. Der entscheidende Vorteil bei einem Schutzvorhang aus einem flexiblen, biegsamen Material ist, dass sich der Schutzvorhang im Falle eines Einschlags von Materialsplittern oder Materialbrocken in den Schutzvorhang sowie bei Berührung mit Maschinen oder Fahrzeugen, beispielsweise mit einem Radlader, die sich im Bereich unterhalb der Sprühnebelvorrichtung befinden, verbiegen kann und dadurch zumindest teilweise den durch die Materialsplitter bzw. Materialbrocken oder die Berührung übertragenen Impuls aufnehmen kann. Schäden an Maschinen oder Fahrzeugen einerseits und andererseits am Schutzvorhang können so wesentlich verringert werden. Gleichzeitig kann der Schutzvorhang im Vergleich zu einer Panzerung gemäß dem Stand der Technik weniger massiv und dadurch vom Gewicht her leichter ausgestaltet sein. Dennoch sollte das Material, aus dem der Schutzvorhang hergestellt ist, selbstverständlich auch gleichzeitig eine entsprechende Härte und Festigkeit aufweisen, sodass der Schutzvorhang nicht durch einen solchen Einschlag durchbrochen wird.

Vorzugsweise bildet der Schutzvorhang auf dessen dem fallenden Schüttgut abgewandten Außenfläche mindestens einen Kanal aus, wobei in dem Kanal zumindest eine Druckleitung für die Versorgung der mindestens einen Düse mit dem flüssigen und/ oder gasförmigen Fluid angeordnet ist. Die in dem Kanal angeordnete Druckleitung ist dadurch vor Beschädigung von äußeren, mechanisch einwirkenden Gefahren, beispielsweise bei der oben erwähnten Berührung mit Maschinen oder Fahrzeugen, viel besser geschützt, sodass die Lebensdauer der Druckleitung in der Regel verlängert wird.

Sofern die Sprühnebeleinheit in den Schutzvorhang eingebaut ist, ist der Schutzvorhang alternativ zu den zuvor genannten Merkmalen oder auch in Kombination zu diesen aus einem flexiblen, biegsamen Material hergestellt und weist demnach die bereits erwähnten Vorteile auf.

Auch kann die Sprühnebeleinheit gemäß einer Ausführungsform der Erfindung derart in den Schutzvorhang eingebaut sein, dass die Sprühnebeleinheit allein von dem Schutzvorhang getragen ist.

In einer Ausführungsform der vorliegenden Erfindung ist eine Hinterschneidung in die Sprühnebeleinheit derart eingearbeitet, dass die wenigstens eine Düse in einem Winkel von kleiner als 90° zu der Ausrichtung des Schutzvorhangs ausgerichtet ist, so dass das fallende Schüttgut von der wenigstens einen Düse in Bezug auf das fallende Schüttgut schräg von oben besprühbar ist. Dies wiederum hat den bedeutenden Vorteil, dass die mindestens eine Düse aufgrund ihrer Besprühung des fallenden Schüttguts von schräg oben weniger von Materialsplittern u.ä. getroffen werden kann als dies bei einer Besprühung des fallenden Schüttguts im rechten Winkel zu dem Schutzvorhang, d.h. von der Horizontalen aus, der Fall wäre. Durch die vorgesehene Hinterschneidung wird somit ein nochmals verbesserter Schutz der zumindest einen Düse vor Beschädigung durch Materialsplittern, größeren Materialbrocken u.ä. gewährleistet. Zudem wird der Sprühnebel durch das Einbringen des Sprühnebels in Richtung des fallenden Schüttguts bzw. Materialstroms bedingt durch die Sogwirkung des fallenden Materialstroms mit nach unten zur Auftreffstelle des fallenden Materialstroms gezogen. Somit kann der Sprühnebel auch an der Auftreffstelle seine Wirkung entfalten.

Vorzugsweise sind sowohl der Schutzvorhang als auch die Hinterschneidung aus einem flexiblen, biegsamen Material hergestellt, sodass der Impuls von Stößen, die von außen auf den Schutzvorhang und/ oder die Hinterschneidung einwirken, aber auch der Impuls von einschlagenden Materialsplittern, groben Materialbrocken u.ä. besser aufgenommen und in Form von Schwingungen des Schutzvorhangs und/ oder der Hinterschneidung besser abgegeben werden kann. Beispielsweise kann die Hinterschneidung aus Gummi in Form eines Gummigussteils hergestellt sein.

Vorzugsweise ist die wenigstens eine Düse gemäß einer Ausführungsform der vorliegenden Erfindung derart in die Sprühnebeleinheit eingebaut, dass die Düse im Wesentlichen außerhalb des von dem Schutzvorhang umfassten Volumens angeordnet ist und sich lediglich der Düsenkopf mit dem daran angeordneten Düsenausgang innerhalb des von dem Schutzvorhang umfassten Volumens befindet oder der an dem Düsenkopf angeordnete Düsenausgang bündig an der dem fallenden Schüttgut zugewandten Innenfläche des Schutzvorhangs anliegt. Eine Anordnung der wenigstens einen Düse im Wesentlichen außerhalb des von dem Schutzvorhang umfassten Volumens dient dazu, die Düse besser vor einer Beschädigung durch Materialsplitter, grobe Materialbrocken u.ä. zu schützen. Da das der Düse zugeführte flüssige und/ oder gasförmige Fluid an dem Düsenausgang des Düsenkopfs austritt, ist zweckmäßig vorgesehen, dass der Düsenausgang zumindest bündig an der dem fallenden Schüttgut zugewandten Innenfläche des Schutzvorhangs anliegt, sodass das aus dem Düsenausgang austretende flüssige und/ oder gasförmige Fluid beim Besprühen des fallenden Schüttguts im Wesentlich vollständig in das Innere des Schutzvorhangs eindringen kann. Der Düsenkopf mit daran angeordnetem Düsenausgang kann sich jedoch auch innerhalb des von dem Schutzvorhang umfassten Volumens befinden.

Zusätzlich zu diesen genannten Merkmalen, jedoch auch ohne eine Kombination mit den zuvor genannten Merkmalen kann die wenigstens eine Düse der Sprühnebeleinheit als Mischdüse ausgebildet sein, in welche sowohl ein flüssiges als auch gasförmiges Fluid zuführbar ist, welche in der Mischdüse miteinander mischbar sind. Eine Mischdüse hat sich beim Besprühen von fallendem Schüttgut insbesondere auch bewährt, da mit einem Gemisch aus einem flüssigen und einem gasförmigen Fluid neben der eigentlichen Besprühung mit einem flüssigen Fluid auch eine zur Besprühung geeignete Geschwindigkeit und Menge der Fluidpartikel, bedingt durch die Mischung mit einem gasförmigen Fluid, effektiver einstellbar ist.

Gemäß einer Ausführungsform der Erfindung weist die Sprühnebeleinheit eine Vielzahl von Düsen auf, welche in Richtung quer zur Ausrichtung des Schutzvorhangs und/oder zumindest teilweise entlang der Längsrichtung der Ausrichtung Schutzvorhangs in Abständen zueinander angeordnet sind. Eine Vielzahl von an der Sprühnebeleinheit angebrachten Düsen sorgt für eine intensivere bzw. stärkere Besprühung des fallenden Schüttguts. Durch eine Verteilung der Düsen wie zuvor beschrieben wird zudem ein relativ gleichmäßiges Besprühen des fallenden Schüttguts gewährleistet. Vorzugsweise kann ergänzend oder alternativ auch eine Mehrzahl von Sprühnebeleinheiten enthalten sein, die in Richtung quer zur Ausrichtung des Schutzvorhangs und/oder zumindest teilweise entlang der Längsrichtung der Ausrichtung Schutzvorhangs in Abständen zueinander angeordnet sind.

In einer Ausführungsform der vorliegenden Erfindung umfasst der Schutzvorhang mehrere lamellenartige, der Länge nach nebeneinander hängend angeordnete und nicht oder zumindest nicht fest bzw. starr miteinander verbundene Streifen. Diese lamellenartigen Streifen sind zumindest im Betrieb der Sprühnebelvorrichtung in ihrer Längsrichtung im Wesentlichen in Richtung des fallenden Schüttguts ausgerichtet. Eine solche Ausgestaltung des Schutzvorhangs ist deutlich flexibler als ein einstückig ausgebildeter Schutzvorhang. Insbesondere dadurch, dass die lamellenartigen Streifen nicht oder zumindest nicht fest bzw. starr miteinander verbunden sind, werden sich im Falle eines Einschlags von Materialsplittern oder Materialbrocken in den Schutzvorhang nur einzelne lamellenartige Streifen unabhängig voneinander verbiegen. Ferner ist im Falle der Beschädigung des Schutzvorhanges häufig nur ein Austausch einzelner beschädigter lamellenartiger Streifen erforderlich, welches deutlich kostengünstiger ist und zeitsparender als ein Austausch des gesamten Schutzvorhangs im Falle von dessen Beschädigung sein kann.

Vorzugsweise ist die Sprühnebeleinheit derart in den Schutzvorhang eingebaut ist, dass sie an einem solchen lamellenartigen Streifen eingebaut ist. So kann ein jeweils einzelner Streifen in dessen Dimensionen an eine jeweils daran eingebaute Sprühnebeleinheit optimal angepasst werden und ausreichende Stabilität und Verdrehsteifigkeit zur Beherbergung der Sprühnebeleinheit bieten und dennoch der Schutzvorhang insgesamt aufgrund der einzelnen nicht oder zumindest nicht fest bzw. starr miteinander verbundenen Streifen eine hohe Flexibilität bereitstellen.

In einer weiteren Ausführungsform der vorliegenden Erfindung sind die lamellenartigen Streifen in einer in ihrer Längsrichtung nacheinander folgenden ersten und zweiten Reihe mit einem Abstand zwischen der ersten und der zweiten Reihe jeweils der Länge nach nebeneinander angeordnet und zudem derart ausgestaltet, dass sie im Betrieb der Sprühnebelvorrichtung das fallende Schüttgut in dessen Umfangsrichtung vollständig oder teilweise umgeben. Dabei ist die Sprühnebeleinheit derart in den Schutzvorhang eingebaut, dass sie in dem Abstand zwischen der ersten und der zweiten Reihe der lamellenartigen Streifen angeordnet ist und mit jeweils einem in Längsrichtung der jeweiligen lamellenartigen Streifen angeordneten Ende verbunden ist. Die Sprühnebeleinheit befindet sich somit zwischen einer quer zur Längsrichtung der lamellenartigen Streifen verlaufenden ersten Reihe aus lamellenartigen Streifen und einer quer zur Längsrichtung der lamellenartigen Streifen verlaufenden zweiten Reihe aus lamellenartigen Streifen. Eine solche Anordnung der Sprühnebeleinheit sozusagen zwischen bzw. umgeben von lamellenartigen Streifen sorgt für einen sehr guten Schutz der Sprühnebeleinheit vor Beschädigungen durch Materialsplitter, groben Materialbrocken usw..

Zur zusätzlichen Verbesserung des Schutzes der Sprühnebeleinheit vor Beschädigungen durch Materialsplitter, groben Materialbrocken usw. weisen die lamellenartigen Streifen vorzugsweise jeweils eine dem Schüttgut abgewandte Außenfläche auf, an welcher jeweils mindestens ein, insbesondere in Längsrichtung verlaufender Kanal ausgebildet ist. In diesem Kanal kann jeweils zumindest eine Druckleitung für die Versorgung der mindestens einen Düse mit dem flüssigen und/ oder gasförmigen Fluid angeordnet. Das Versehen der dem Schüttgut abgewandten Außenfläche der lamellenartigen Streifen mit einem Kanal, der eine Druckleitung in Umfangsrichtung umschließt, sorgt für einen Schutz der die Düse versorgenden Druckleitung vor Beschädigungen durch Materialsplitter, groben Materialbrocken usw.. Ein solcher Kanal ist bevorzugt in etwa in der Mitte eines solchen Streifens angeordnet, sodass die Verdrehsteifigkeit eines solchen Streifens, insbesondere auch bei beherbergter Druckleitung, nicht oder nur unwesentlich erhöht wird.

Weiterhin sieht die vorliegende Erfindung gemäß einer Ausführungsform vor, dass die lamellenartigen Streifen jeweils ein Stromkabel aufweisen. Im Falle eines Betriebs der Sprühnebelvorrichtung bei Umgebungstemperaturen nahe dem Gefrierpunkt des zum Besprühen des fallenden Schüttguts vorgesehenen Fluides kann eine Heizung für die mindestens eine Düse der Sprühnebeleinheit mit Strom versorgt werden. Eine solche Heizung ist hierbei zweckmäßig zusätzlich in der Sprühnebeleinheit integriert. Das Stromkabel ist vorzugsweise in die lamellenartigen Streifen integriert, insbesondere eingespritzt oder eingegossen, sodass es vor Beschädigung durch äußere Einflüsse geschützt ist. In einer weiteren Ausführungsform oder zusätzlich zu dem oben aufgeführten Stromkabel weist die mindestens eine Düse der Sprühnebeleinheit eine Schutzabdeckung zum zumindest teilweisen Abdecken der Düse auf. Die Schutzabdeckung umgibt die Düse, abgesehen von dem Düsenaustritt am Düsenkopf, vorzugsweise vollständig. Zudem ist die Schutzabdeckung vorzugsweise aus einem flexiblen Material, beispielsweise aus Gummi, hergestellt und bietet dadurch einen Schutz der Düse vor einer Beschädigung durch äußere Einflüsse wie Materialsplitter o.ä.. Darüber hinaus ist die Schutzabdeckung vorzugsweise thermisch isolierend ausgestaltet und sorgt somit bei dem Betrieb der erfindungsgemäßen Sprühnebelvorrichtung im Winter insbesondere bei Umgebungstemperaturen nahe und dem Gefrierpunkt des zum Besprühen des fallenden Schüttguts vorgesehenen Fluides für einen Schutz des durch die Düse transportierten Fluides vor dem Gefrieren.

In einer Ausführungsform der vorliegenden Erfindung weist die Sprühnebeleinheit eine Vielzahl von Düsen auf. Zudem weist jeder lamellenartige Streifen an dessen, dem fallenden Schüttgut abgewandten Außenfläche mindestens zwei Kanäle auf, in denen jeweils eine Druckleitung für die Versorgung der Düsen mit dem flüssigen und/ oder gasförmigen Fluid angeordnet ist. Eine Vielzahl von in der Sprühnebeleinheit angeordneten Düsen sorgt für eine intensivere bzw. stärkere Besprühung des fallenden Schüttguts und somit auch für ein stärkeres Unterdrücken von entstehendem Staub, insbesondere bei auftretendem Wind.

In einer weiteren Ausführungsform der vorliegenden Erfindung ist der Rahmen, an dem der Schutzvorhang angehängt angebracht ist, ein im Wesentlichen rechteckiger Metallrahmen. Zudem umgibt der Schutzvorhang im Betrieb der Sprühnebelvorrichtung das fallende Schüttgut in dessen Umfangsrichtung vollständig. Demnach ist der Schutzvorhang im Wesentlichen in Form eines Mantels eines Quaders mit vier rechteckigen Seitenflächen um das fallende Schüttgut herum angeordnet. Ein derart ausgebildeter Schutzvorhang ist einfacher herzustellen, als dies beispielsweise bei einem Schutzvorhang in Form eines Mantels eines Zylinders, d.h. im Falle eines kreisförmigen Rahmens, der Fall wäre. Insbesondere lassen sich die lamellenartigen Streifen im Fall eines aus lamellenartigen Streifen bestehenden Schutzvorhangs nicht nur besser in Form von rechteckigen Seitenflächen als in Form von einem Mantel eines Zylinders der Länge nach nebeneinander anordnen, sondern die Streifen können bei einem Schutzvorhang in Form eines Mantels eines Quaders im Vergleich zu einem Schutzvorhang in Form eines Mantels eines Zylinders auch einfacher dichter nebeneinander angeordnet werden, was wiederum einen besseren Schutz vor entstehendem Staub, austretenden Materialsplittern usw. darstellt.

Es ist jedoch auch möglich, dass der Schutzvorhang im Betrieb der Sprühnebelvorrichtung das fallende Schüttgut in dessen Umfangsrichtung lediglich teilweise umgibt und somit nur eine Seitenfläche, zwei oder drei Seitenflächen eines Mantels eines Quaders vollständig oder auch teilweise ausbilden.

Zudem kann der Rahmen, an dem der Schutzvorhang angehängt angebracht ist, im Wesentlichen rund, aber auch in weiteren Ausführungsformen elliptisch, als Vieleck oder anderweitig geformt ausgestaltet sein. Im Falle eines im Wesentlichen runden Rahmens sind die lamellenartigen Streifen in Form von einem Mantel eines Zylinders der Länge nach nebeneinander angeordnet. Im Falle eines im Wesentlichen vieleckigen Rahmens sind die lamellenartigen Streifen in Form von einer Anzahl, die der Anzahl der Ecken des Vielecks entspricht, von nebeneinander angeordneten viereckigen Seitenflächen der Länge nach nebeneinander angeordnet. Der Rahmen kann darüber hinaus auch aus einem anderen material als Metall hergestellt sein.

Gemäß einer Ausführungsform der vorliegenden Erfindung weist die Sprühnebeleinheit eine Vielzahl von Düsen auf, welche in Richtung quer zur Ausrichtung des Schutzvorhangs zumindest entlang einer der rechteckigen vier Seitenflächen des Schutzvorhangs in regelmäßigen Abständen zueinander angeordnet sind. Vorzugsweise kann ergänzend oder alternativ auch eine Mehrzahl von Sprühnebeleinheiten enthalten sein, die gleichermaßen in Richtung quer zur Ausrichtung des Schutzvorhangs und/oder zumindest teilweise entlang der Längsrichtung der Ausrichtung Schutzvorhangs in Abständen zueinander angeordnet sind. Somit umgeben mehrere Düsen das fallende Schüttgut zumindest teilweise in dessen Umfangsrichtung und garantieren durch deren regelmäßigen Abstände zueinander ein gleichmäßiges Besprühen des fallenden Schüttguts. Dies wiederum bewirkt insbesondere ein sehr effektives Reduzieren des entstehenden Staubs.

Gemäß einer Ausführungsform der Erfindung weist der Schutzvorhang im Wesentlichen in Richtung des fallenden Schüttguts eine Länge von mindestens 100 cm auf und/oder die lamellenartigen Streifen weisen jeweils eine Länge von mindestens 30 cm und/oder eine Breite von mindestens 20 cm auf. Die genannten Werte für die Länge des Schutzvorhangs sowie für die Länge und Breite der lamellenartigen Streifen können jedoch auch unterschritten werden. Es hat sich allerdings als besonders vorteilhaft erwiesen, wenn der Schutzvorhang eine Länge von mindestens 100 cm hat, da er dann einen besonders effektiven Schutz vor aus dem fallenden Schüttgut austretenden Staubpartikeln, Materialsplittern, groben Materialbrocken u.ä. bietet.

Bevorzugt ist mit der Sprühnebelvorrichtung gemäß vorstehender Würdigung ferner eine Fluidzufuhreinrichtung verbunden oder auch enthalten. In einer Ausführungsform der Erfindung weist die Fluidzufuhreinrichtung zumindest einen Wassertank, eine Pumpe, eine Wasserzufuhreinrichtung, eine Druckluftzufuhreinrichtung und/oder einen Kompressor auf. Dabei kann auch in dem Wassertank eine Heizung vorgesehen sein, um zusätzlich einen Betrieb der Sprühnebelvorrichtung auch bei Umgebungstemperaturen nahe dem Gefrierpunkt zu weiter zu verbessern. Die Fluidzufuhreinrichtung ist hierbei zweckmäßig mit der Sprühnebeleinheit über wenigstens eine Druckleitung verbunden. Ein flüssiges Fluid, in der hier beschriebenen Ausführungsform Wasser, kann mit Hilfe der Fluidzufuhreinrichtung aus deren Tank und mit deren Pumpe über eine entsprechende Druckleitung einer Düse zugeführt werden. Ein gasförmiges Fluid hingegen kann aus einer Druckluftzufuhreinrichtung und/oder einem Kompressor der Fluidzufuhreinrichtung über eine entsprechende Druckleitung einer Düse zugeführt werden. Die erfindungsgemäße Sprühnebelvorrichtung kann somit vorteilhaft in Vorrichtungen bzw. Anlagen, an welche eine oder mehrere Sprühnebeleinheiten anzuordnen ist bzw. sind oder auch mehrere Sprühnebelvorrichtung gemäß vorstehender Würdigung anzuordnen sind, integriert werden, wobei die Düsen der Sprühnebeleinheit zweckmäßig über eine oder mehrere Druckleitungen von der Fluidzufuhreinrichtung beliefert werden.

Weitere Vorteile, Merkmale und Anwendungsmöglichkeiten der vorliegenden Erfindung werden anhand der folgenden Beschreibung von Ausführungsformen davon sowie der dazugehörigen Figuren deutlich.
- Figuren 1A, 1B:: zeigen eine an einem Förderband mit Einhausung installierte erfindungsgemäße Sprühnebelvorrichtung mit einem Schutzvorhang gemäß einer Ausführungsform der Erfindung in zwei verschiedenen perspektivischen Ansichten,
- Figur 2:: zeigt die erfindungsgemäße Sprühnebelvorrichtung mit Schutzvorhang gemäß Figuren 1A und 1B in einer perspektivischen Ansicht,
- Figur 3:: zeigt die in Figur 2 dargestellte erfindungsgemäße Sprühnebelvorrichtung mit Schutzvorhang in einer Seitenansicht,
- Figur 4:: zeigt die in Figur 2 dargestellte erfindungsgemäße Sprühnebelvorrichtung mit Schutzvorhang in einer Draufsicht.

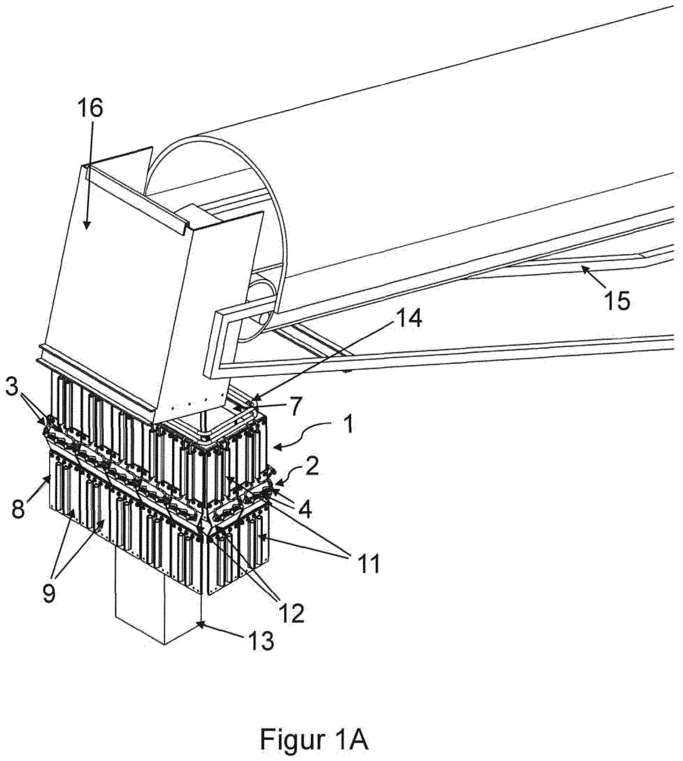

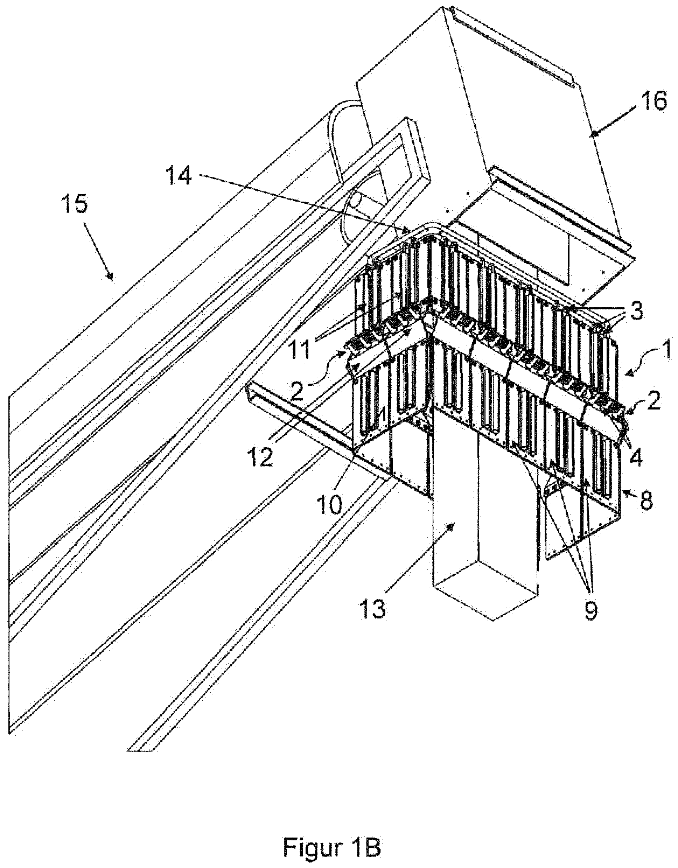

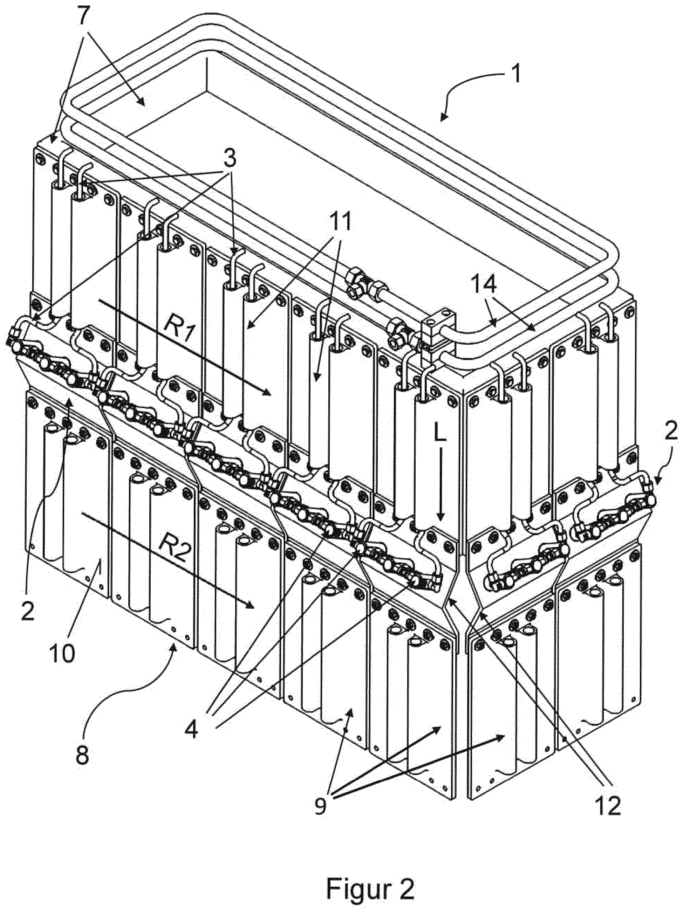

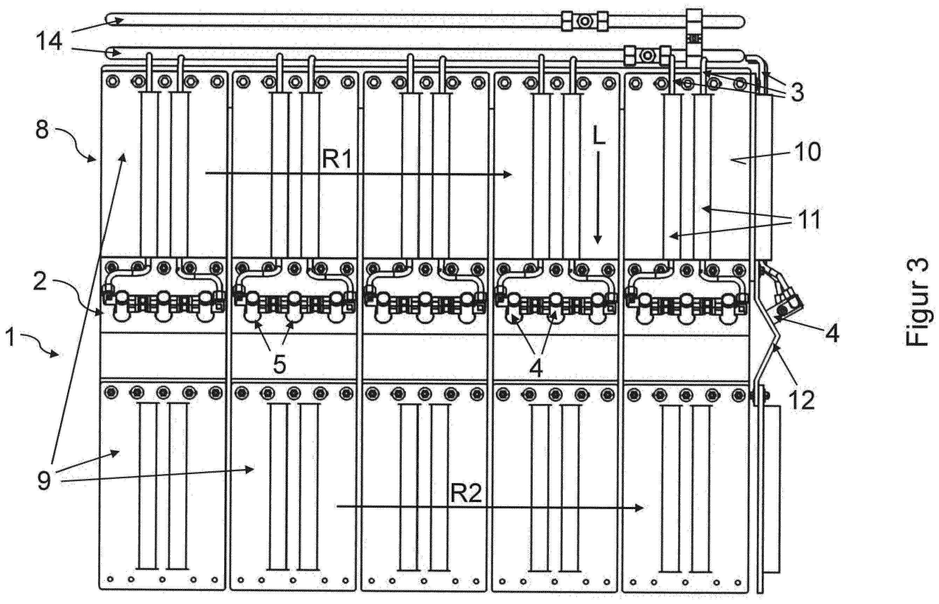

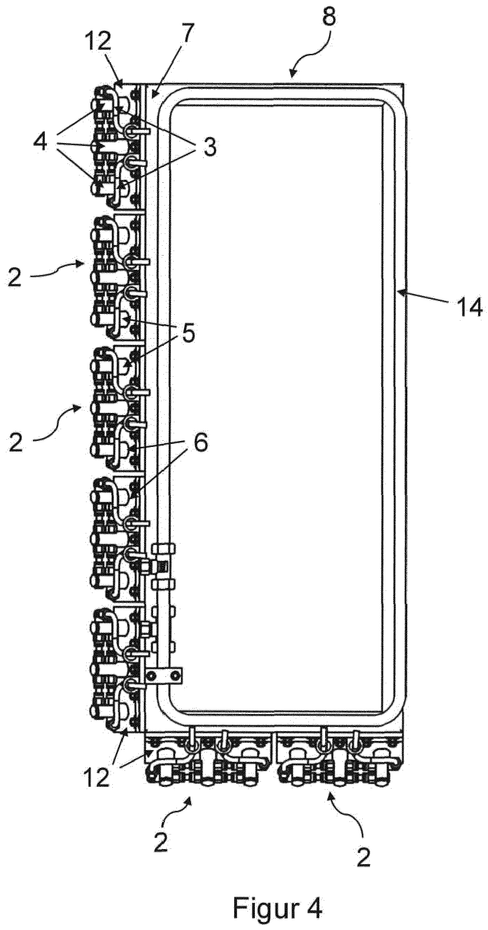

Figuren 1A und 1B zeigen beide jeweils eine perspektivische Ansicht auf eine bevorzugte Ausführungsform einer erfindungsgemäßen Sprühnebelvorrichtung 1 zum Niederschlagen von Staub, bei fallenden Materialströmen, insbesondere bei Bandabwürfen oder Rutschen. Figuren 2, 3 und 4 zeigen die in den Figuren 1A und 1B dargestellte erfindungsgemäße Sprühnebelvorrichtung 1 in vergrößerter Ansicht, und zwar in einer perspektivischen Ansicht (Figur 2), in einer Seitenansicht (Figur 3) und in einer Draufsicht (Figur 4).

Die erfindungsgemäße Sprühnebelvorrichtung 1 weist mindestens eine Sprühnebeleinheit 2 mit mindestens einem Druckleitungsanschluss für eine Druckleitung 3 zum Verbinden mit einer Fluidzufuhreinrichtung (nicht dargestellt) sowie mit mindestens einer Düse 4 mit einem Düsenkopf und einem daran angeordneten Düsenausgang auf, wobei wenigstens ein flüssiges und/ oder gasförmiges Fluid über den Druckleitungsanschluss in die Düse 4 zuführbar ist. Darüber hinaus umfasst die Sprühnebelvorrichtung 1 einen Schutzvorhang 8 und einen Rahmen 7, an welchem der Schutzvorhang 8 hängend angebracht ist. In der dargestellten Ausführungsform ist der Rahmen 7 ein rechteckiger Metallrahmen und, wie in Figuren 1A und 1B gezeigt, an einer Einhausung 16 eines Bandabwurfs eines Förderbands 15 befestigt. Es sind jedoch auch weitere Ausführungsformen denkbar, bei denen der Rahmen 7 beispielsweise rund, elliptisch, vieleckig oder anderweitig geformt ausgestaltet sein kann und auch aus einem anderen Material hergestellt sein kann. Die Einhausung 16 des Bandabwurfs ist an dem freien Ende eines Schüttgut befördernden Förderbandes 15 angeordnet und sorgt einerseits dafür, dass das an dem freien Ende des Förderbandes 15 herunterfallende Schüttgut 13 größtenteils abgeschirmt wird, sodass Materialsplitter und Materialbrocken sowie der entstehende Staub zumindest an der Stelle des Bandabwurfs nicht in die Umgebung entweichen können. Andererseits sorgt die Einhausung 16 des Bandabwurfs dafür, dass das Schüttgut 13 beim Fallen auch tatsächlich durch den Rahmen 7 und die Sprühnebelvorrichtung 1 fällt.

Die in den Figuren 1A, 1B, 2, 3 und 4 dargestellte erfindungsgemäße Sprühnebelvorrichtung 1 weist nicht lediglich eine Sprühnebeleinheit 2, sondern in zweckmäßiger Weiterbildung eine Vielzahl von Sprühnebeleinheiten 2 auf, was für eine intensive Besprühung des fallenden Schüttguts 13 sorgt. Es ist jedoch auch möglich, dass die erfindungsgemäße Sprühnebelvorrichtung 1 lediglich eine Sprühnebeleinheit 2 aufweist. Zweckmäßig sind die Sprühnebeleinheiten 2 in den Schutzvorhang 8 eingebaut, und zwar derart, dass sie jeweils allein von dem Schutzvorhang 8 getragen werden. Es ist jedoch in weiteren Ausführungsformen auch möglich, die Sprühnebeleinheiten 2 auf andere Weise in die Sprühnebelvorrichtung 1 zu integrieren, beispielsweise an dem Rahmen 7 zu montieren. Allerdings ist dann die Wirkung der in den Sprühnebeleinheiten 2 enthaltenen Düsen mit Abstrichen verbunden, da deren Angriffspunkt weiter in Richtung Einhausung 16 des Bandabwurfs versetzt ist und nicht optimal auf das herunterfallende Schüttgut 13 einwirken kann. Über wenigstens einen Druckleitungsanschluss der jeweiligen Sprühnebeleinheiten 2 ist mindestens eine Druckleitung 3 zum Verbinden der Sprühnebeleinheiten 2 mit einer Fluidzufuhreinrichtung, die jedoch in den Figuren nicht gezeigt ist, angeschlossen. Die Fluidzufuhreinrichtung ist hierbei somit zweckmäßig mit den Sprühnebeleinheiten 2 über entsprechende Druckleitungsanschlüsse angeschlossene Druckleitungen 3 verbunden.

Eine solche Fluidzufuhreinrichtung kann folglich neben einer erfindungsgemäßen Sprühnebelvorrichtung 1 gleichermaßen Bestandteil einer nicht näher dargestellten vollständigen Sprühnebelvorrichtung 1 sein und umfasst zweckmäßig ferner zumindest einen Tank, eine Pumpe, eine Wasserzufuhreinrichtung, eine Druckluftzufuhreinrichtung und/oder einen Kompressor.

An jeder Sprühnebeleinheit 2 sind in der dargestellten Ausführungsform zweckmäßig eine Vielzahl von Düsen 4 angeordnet. Die Düsen 4 werden über die jeweiligen Druckleitungen 3 mit einem flüssigen und gasförmigen Fluid versorgt und sind in Figuren 1A, 1B, 2, 3 und 4 bevorzugt als Mischdüsen ausgebildet, in denen das flüssige und das gasförmige Fluid mischbar sind. *Es sind jedoch auch andere Arten von Düsen 4 denkbar. Beispielsweise können die Düsen 4 nur mit einem flüssigen Fluid oder aber nur mit einem gasförmigen Fluid versorgt werden, sodass ein Mischen von einem flüssigen Fluid mit einem gasförmigen Fluid in der Düse 4 nicht erforderlich ist. Die Düsen 4 sind in der gezeigten Ausführungsform in Richtung quer zur Ausrichtung des Schutzvorhangs 8 in regelmäßigen Abständen zueinander angeordnet, können aber auch in einer weiteren Ausführungsform in unregelmäßigen Abständen zueinander und/ oder zumindest teilweise entlang der Längsrichtung L der Ausrichtung Schutzvorhangs 8 angeordnet sein. Die Düsen 4 können ferner mit einer Schutzabdeckung zum zumindest teilweisen Abdecken der Düsen 4 ausgestattet sein. Vorzugsweise ist diese Schutzabdeckung thermisch isolierend ausgestaltet. Eine derartige Schutzabdeckung ist in den Figuren 1A, 1B, 2, 3 und 4 jedoch aus Gründen der Übersichtlichkeit nicht dargestellt.

Wie oben bereits erwähnt, umfasst die erfindungsgemäße Sprühnebelvorrichtung 1 einen Schutzvorhang 8, der in der dargestellten Ausführungsform an einem rechteckigen Metallrahmen 7 hängend angebracht ist und durch den das fallende Schüttgut 13 fällt, wie aus Figuren 1A und 1B ersichtlich. Der Schutzvorhang 8 ist zumindest im Betrieb der Sprühnebelvorrichtung 1 von dem Rahmen 7 aus im Wesentlichen in Richtung des durch den Rahmen 7 fallenden Schüttguts 13 ausgerichtet. Da der Schutzvorhang 8 das fallende Schüttgut 13 in dessen Umfangsrichtung in der gezeigten Ausführungsform im Betrieb der Sprühnebelvorrichtung 1 vollständig umgibt, ist er in den Figuren 1A, 1B, 2, 3 und 4 somit im Wesentlichen in Form eines Mantels eines Quaders mit vier rechteckigen Seitenflächen um das fallende Schüttgut 13 herum angeordnet. Der Schutzvorhang 8 kann das fallende Schüttgut 13 in dessen Umfangsrichtung jedoch in weiteren Ausführungsformen im Betrieb der Sprühnebelvorrichtung 1 auch nur zumindest teilweise umgeben. Beispielsweise kann der Schutzvorhang 8 nur an einer Seite, an zwei Seiten oder an drei Seiten des Rahmens 7 über die gesamte Seite oder auch nur teilweise hängend angebracht sein. Auch kann der Schutzvorhang verschiebbar am Rahmen hängend angebracht sein. Folglich kann auch bei einem lediglich teilweise umgebenden und/oder verschiebbar hängend angebrachtem Schutzvorhang, insbesondere je nach Windrichtung noch ein wirksamer Schutz, insbesondere gegen unerwünschte Staubentwicklung gewährleistet werden.

Der Schutzvorhang 8 ist ferner zweckmäßig aus einem flexiblen, biegsamen Material, insbesondere einem Gummimaterial hergestellt. Im Falle eines Einschlags von Materialsplittern oder Materialbrocken in den Schutzvorhang 8 sowie bei Berührung mit Maschinen oder Fahrzeugen, die sich im Bereich unterhalb der Sprühnebelvorrichtung 1 befinden, kann er sich somit verbiegen und dadurch zumindest teilweise den durch die Materialsplitter bzw. Materialbrocken oder die Berührung übertragenen Impuls aufnehmen. Schäden an Maschinen oder Fahrzeugen einerseits und andererseits am Schutzvorhang 8 und insbesondere auch an den in diesen eingebauten Sprühnebeleinheiten 2 können so wesentlich verringert werden.

Damit der Schutzvorhang 8 je nach verwendeten Material auch beim Verbiegen noch eine dem vorgegebenen Volumen ähnliches Volumen aufweist, durch welches das fallende Schüttgut 13 fallen kann, kann an der Sprühnebelvorrichtung 1 in einer weiteren Ausführungsform ein zusätzlicher äußerer Begrenzungsrahmen vorgesehen sein, welcher ein Verbiegen des Schutzvorhangs 8 lediglich innerhalb eines bestimmter Grenzen ermöglicht.

Der Schutzvorhang 8 besteht in der gezeigten Ausführungsform der Figuren 1A, 1B, 2, 3 und 4 aus mehreren lamellenartigen Streifen 9, die aus einem flexiblen, biegsamen Material, insbesondere aus einem Gummimaterial, hergestellt sind. Der Schutzvorhang 8 ist jedoch nicht auf diese Ausführungsform begrenzt und kann beispielsweise auch als Ganzes oder aus vier von den Seiten des Rahmens 7 herabhängenden Lappen aus Gummi hergestellt sein oder anderweitig ausgestaltet sein. Die lamellenartigen Streifen 9 sind gemäß der dargestellten Ausführungsform der Länge nach nebeneinander angeordnet und nicht miteinander verbunden, können in einer weiteren Ausführungsform aber miteinander verbunden sein, beispielsweise mit einem Seil, jedoch zumindest nicht fest miteinander verbunden sein. Die lamellenartigen Streifen 9 sind in deren Längsrichtung L zumindest im Betrieb der Sprühnebelvorrichtung 1 im Wesentlichen in Richtung des fallenden Schüttguts 13 ausgerichtet, so dass die lamellenartigen Streifen 9 im Betrieb der Sprühnebelvorrichtung 1 das fallende Schüttgut 13 in dessen Umfangsrichtung in der hier dargestellten Ausführungsform vollständig umgeben.

Die lamellenartigen Streifen 9 sind bei der dargestellten Ausführungsform zudem in einer in ihrer Längsrichtung L nacheinander folgenden ersten Reihe R1 und zweiten Reihe R2 jeweils der Länge nach nebeneinander angeordnet. In dieser Anordnung weist ein jeweiliger lamellenartiger Streifen 9 in der dargestellten Ausführungsform zweckmäßig jeweils eine Breite zwischen 20 cm und 30 cm sowie eine Länge zwischen 30 cm und 50 cm auf. Der Schutzvorhang 8 als Ganzes hingegen hat im Wesentlichen in Richtung des fallenden Schüttguts 13 eine Länge von mindestens 100 cm. Es sind jedoch auch davon abweichende Abmessungen denkbar, d.h. die lamellenartigen Streifen 9 sowie der Schutzvorhang 8 sind nicht auf die genannten Maße beschränkt. Die erste Reihe R1 und die zweite Reihe R2 der lamellenartigen Streifen 9 sind voneinander beabstandet, sodass die Sprühnebeleinheiten 2 derart in den Schutzvorhang 8 eingebaut werden können, dass sie zweckmäßig jeweils in dem Abstand zwischen der ersten Reihe R1 und der zweiten Reihe R2 der lamellenartigen Streifen 9 angeordnet sind, wie dies in der gezeigten Ausführungsform der Fall ist.

In der dargestellten Ausführungsform sind die einzelnen Sprühnebeleinheiten 2 an jeweils einem lamellenartigen Streifen 9 eingebaut. Jede Sprühnebeleinheit 2 ist mit jeweils einem in Längsrichtung L der jeweiligen lamellenartigen Streifen 9 angeordneten Ende verbunden. Beispielsweise können die Sprühnebeleinheiten 2 zwischen der ersten Reihe R1 und der zweiten Reihe R2 der lamellenartigen Streifen 9 mit Hilfe von Schraubmitteln an den entsprechenden Enden der lamellenartigen Streifen 9 befestigt sein. Ferner werden die Sprühnebeleinheiten 2 zweckmäßig allein von den lamellenartigen Streifen 9, zwischen denen sie jeweils angeordnet sind, getragen.

In der in den Figuren 1A, 1B, 2, 3 und 4 dargestellten Ausführungsform des Schutzvorhangs 8 sind jeweils drei Düsen 4 zwischen zwei in Längsrichtung L der lamellenartigen Streifen 9 nacheinander angeordneten lamellenartigen Streifen 9 in eine jeweilige Sprühnebeleinheit 2 eingebaut. Wie aus Figur 4 hervorgeht, sind diese Düsen 4 in Richtung quer zur Ausrichtung des Schutzvorhangs 8 entlang von zwei der rechteckigen vier Seitenflächen des Schutzvorhangs 8, und zwar entlang einer großen und einer kleinen Seitenfläche des in Form einer Mantelfläche eines Quaders ausgebildeten Schutzvorhangs 8, in regelmäßigen Abständen zueinander angeordnet. Es können jedoch auch Sprühnebeleinheiten 2 mit Düsen 4 entlang einer, drei oder vier der rechteckigen vier Seitenflächen angeordnet sein, und zwar vorzugsweise entlang der gesamten Breite der jeweiligen Seitenfläche(n), aber auch oder nur teilweise entlang der Breite der jeweiligen Seitenfläche(n).

Die Sprühnebeleinheiten 2 befinden sich in der dargestellten Ausführungsform größtenteils außerhalb des von dem Schutzvorhang 8 eingefassten Volumens. Dementsprechend sind auch die Druckleitungen 3, welche die Düsen 4 der Sprühnebeleinheiten 2 mit einem flüssigen und gasförmigen Fluid versorgen, außerhalb des von dem Schutzvorhang 8 eingefassten Volumens angeordnet. Die Düsen 4 sind zweckmäßig derart in die jeweilige Sprühnebeleinheit 2 eingebaut, dass die Düsen 4 im Wesentlichen außerhalb des von dem Schutzvorhang 8 umfassten Volumens angeordnet sind und der an dem Düsenkopf 5 angeordnete Düsenausgang 6 (nur in Figuren 3 bzw. 4 gezeigt) bündig an der dem fallenden Schüttgut 13 zugewandten Innenfläche des Schutzvorhangs 8 anliegt, was aus der Figur 3 hervorgeht. In einer weiteren Ausführungsform kann lediglich der Düsenkopf 5 sowie der an diesem angeordnete Düsenausgang 6 auch innerhalb des vom Schutzvorhang 8 umfassten Volumens angeordnet sein. Eine Einbauweise gemäß der in den Figuren 1A, 1B, 2, 3 und 4 dargestellten und beschriebenen Ausführungsform hat den großen Vorteil, dass die Druckleitungen 3, die Sprühnebeleinheiten 2 sowie die an diesen angebrachten Düsen 4 sehr gut vor einer Beschädigung durch Materialsplitter, Materialbrocken und Staubpartikel geschützt werden.

Weiterhin sind Hinterschneidungen 12 in die jeweiligen Sprühnebeleinheiten 2 eingearbeitet, durch welche die Düsen 4 jeweils in einem Winkel von kleiner als 90° zu der Ausrichtung des Schutzvorhangs 8 ausgerichtet sind, so dass die Düsen 4 das fallende Schüttgut 13 in Bezug auf das fallende Schüttgut 13 stets schräg von oben besprühen. Eine derartige Ausrichtung der Düsen 4 mit Besprühung des fallenden Schüttguts 13 von schräg oben sorgt zusätzlich für einen verbesserten Schutz der Düsen 4 vor Beschädigung durch Materialsplitter u.ä. im Vergleich zu einer Besprühung des fallenden Schüttguts 13 im rechten Winkel zu dem Schutzvorhang 8, d.h. von der Horizontalen aus, da das fallende Schüttgut 13 insgesamt an den Düsen 4 vorbeigeführt wird und Materialsplitter u.ä. eher selten aus der gewöhnlichen Fallrichtung nach schräg oben geschleudert werden. Darüber hinaus wird der Sprühnebel durch das Einbringen des Sprühnebels in Richtung des fallenden Schüttguts 13 bzw. Materialstroms bedingt durch die Sogwirkung des fallenden Materialstroms mit nach unten zur Auftreffstelle des fallenden Materialstroms gezogen. Somit kann der Sprühnebel auch an der Auftreffstelle seine Wirkung entfalten.

In der dargestellten Ausführungsform sind sowohl der Schutzvorhang 8 als auch die Hinterschneidung 12 in zweckmäßiger Weiterbildung aus einem flexiblen, biegsamen Material hergestellt, sodass der Impuls von Stößen, die von außen auf den Schutzvorhang 8 und/ oder die Hinterschneidung 12 einwirken, aber auch der Impuls von einschlagenden Materialsplittern, groben Materialbrocken u.ä. besser aufgenommen und in Form von Schwingungen des Schutzvorhangs 8 und/ oder der Hinterschneidung 12 besser abgegeben werden kann. Beispielsweise kann die Hinterschneidung 12 aus Gummi in Form eines Gummigussteils hergestellt sein.

Um die Druckleitungen 3 zusätzlich vor Beschädigung von innen und insbesondere von außen zu schützen, ist zweckmäßig zumindest ein Kanal 11 an der Außenfläche 10 des Schutzvorhangs 8 angebracht und zwar derart, dass der Schutzvorhang 8, und insbesondere gemäß der dargestellten Ausführungsform jeder lamellenartige Streifen 9, auf dessen dem fallenden Schüttgut 13 abgewandten Außenfläche 10 zumindest einen Kanal 11 ausbildet. In diesem Kanal 11 ist eine Druckleitung 3 für die Versorgung der Düsen 4 mit dem flüssigen und gasförmigen Fluid angeordnet. In der dargestellten Ausführungsform bildet die dem fallenden Schüttgut 13 abgewandte Außenfläche 10 eines jeden lamellenartigen Streifens 9 jeweils zwei Kanäle 11 aus. In einer weiteren Ausführungsform der Erfindung können jedoch auch mehr als zwei Kanäle 11 oder kann auch nur ein Kanal 11 an der Außenfläche 10 eines jeweiligen lamellenartigen Streifens 9 ausgebildet oder anderweitig angebracht sein. Jeder dieser Kanäle 11 umschließt jeweils einen großen Teilabschnitt einer zu den Düsen 4 führenden Druckleitung 3 für deren Versorgung mit flüssigem bzw. gasförmigem Fluid. Im Gegensatz zu Druckleitungen 3, die innerhalb des Schutzvorhangs 8 angeordnet sind, weist eine derartige Anordnung der Druckleitungen 3 wie in den Figuren 2, 3 und 4 den großen Vorteil auf, dass die Druckleitungen 3 sehr gut vor Beschädigung von innen, d.h. durch Materialsplittern, größeren Materialbrocken u.ä. geschützt werden. Gegenüber einer Anordnung der Druckleitungen 3 außerhalb des Schutzvorhangs 8 wird einer Beschädigung der Druckleitungen 3 von außen, beispielsweise aufgrund von einer Berührung mit Maschinen und Fahrzeugen, ebenso vorgebeugt, indem die Druckleitungen 3 von Kanälen, die in die lamellenartigen Streifen 9 jeweils gemäß der Figuren 2, 3 und 4 eingebaut sind, zumindest größtenteils umschlossen werden. Ein Austausch der Druckleitungen 3 aufgrund von Beschädigung von innen sowie von außen ist dadurch bedingt kaum oder gar nicht erforderlich, sodass sowohl Kosten als auch Arbeitszeit eingespart werden. Die Kanäle 11 sind bevorzugt in etwa mittig entlang der Außenfläche 10 eines jeweiligen lamellenartigen Streifens 9 ausgebildet, z.B. in Spritztechnik, so dass deren Ausbildung die Flexibilitätscharakteristik der einzelnen lamellenartigen Streifen 9 am wenigstens negativ beeinflussen.

Die lamellenartigen Streifen 9 können ferner jeweils ein Stromkabel aufweisen. Dies ist in den Figuren 1A, 1B, 2, 3 und 4 jedoch aus Gründen der Übersichtlichkeit nicht dargestellt. Im Falle eines Betriebs der Sprühnebelvorrichtung 1 bei Umgebungstemperaturen nahe dem Gefrierpunkt des zum Besprühen des fallenden Schüttguts 13 vorgesehenen Fluides kann eine Heizung für die Düsen 4 der Sprühnebeleinheit 2 mit Strom versorgt werden. Das Stromkabel ist vorzugsweise in das Material der lamellenartigen Streifen 9 bei deren Herstellung mit integriert, also z.B. eingegossen oder eingespritzt, sodass es vor Beschädigung durch äußere Einflüsse geschützt ist.

Es wird darauf hingewiesen, dass sämtliche Merkmale, die sich einem Fachmann aus der vorliegenden Beschreibung, den Figuren ergeben, auch wenn diese Merkmale nur im Zusammenhang mit bestimmten weiteren Merkmalen beschrieben wurden, sowohl einzeln als auch in beliebigen Zusammensetzungen mit anderen der in der vorliegenden Erfindung offenbarten Merkmale oder Merkmalsgruppen kombinierbar sind, soweit dies nicht explizit ausgeschlossen wurde oder technische Gegebenheiten derartige Kombinationen unmöglich oder sinnlos machen. Zugunsten der Kürze und der Lesbarkeit der Beschreibung wurde eine umfassende, ausdrückliche Beschreibung sämtlicher möglicher Kombinationen von Merkmalen vermieden. Der durch die Patentansprüche definierte Schutzbereich der vorliegenden Erfindung wird nicht durch die in der Beschreibung und den Zeichnungen im Detail dargestellten und lediglich als Beispiel dienenden Ausführungsformen der Erfindung beschränkt. Abwandlungen der offenbarten Ausführungsformen sind für den Fachmann aus den Zeichnungen, der Beschreibung und den beigefügten Ansprüchen offensichtlich. Das in den Patentansprüchen aufgeführte Wort "aufweisen" schließt andere Elemente oder Schritte nicht aus. Der unbestimmte Artikel "eine" oder "ein" schließt eine Mehrzahl nicht aus. Die Kombination von Merkmalen, die in verschiedenen Patentansprüchen beansprucht sind, ist nicht ausgeschlossen.

### Bezugszeichenliste

- 1: Sprühnebelvorrichtung
- 2: Sprühnebeleinheit
- 3: Druckleitung
- 4: Düse
- 5: Düsenkopf
- 6: Düsenausgang
- 7: Rahmen
- 8: Schutzvorhang
- 9: lamellenartige Streifen
- 10: Außenfläche der lamellenartigen Streifen
- 11: Kanal
- 12: Hinterschneidung
- 13: Fallendes Schüttgut
- 14: Systemleitungen
- 15: Förderband
- 16: Einhausung des Bandabwurfs

## Patentansprüche

1. Sprühnebelvorrichtung (1) zum Niederschlagen von Staub, bei fallenden Materialströmen, insbesondere bei Bandabwürfen oder Rutschen, wobei die Sprühnebelvorrichtung (1) wenigstens eine Sprühnebeleinheit (2) aufweist,
wobei die Sprühnebeleinheit (2)
- wenigstens einen Druckleitungsanschluss für eine Druckleitung (3) zum Verbinden mit einer Fluidzufuhreinrichtung aufweist, und
- wenigstens eine Düse (4) mit einem Düsenkopf (5) und einem an diesem angeordneten Düsenausgang (6) aufweist, in welche wenigstens ein flüssiges und/ oder gasförmiges Fluid über den Druckleitungsanschluss zuführbar ist,
**dadurch gekennzeichnet, dass** die Sprühnebelvorrichtung (1) einen Rahmen (7) und einen an dem Rahmen hängend angebrachten Schutzvorhang (8) aufweist, so dass der Schutzvorhang (8) zumindest im Betrieb der Sprühnebelvorrichtung (1) von dem Rahmen (7) aus im Wesentlichen in Richtung des durch den Rahmen (7) fallenden Schüttguts (13) ausgerichtet ist und im Betrieb der Sprühnebelvorrichtung (1) das fallende Schüttgut (13) in dessen Umfangsrichtung vollständig oder zumindest teilweise umgibt und
wobei die Sprühnebeleinheit (2) in den Schutzvorhang (8) eingebaut ist.

2. Sprühnebelvorrichtung (1), insbesondere nach Anspruch 1, zum Niederschlagen von Staub, bei fallenden Materialströmen, insbesondere bei Bandabwürfen oder Rutschen, wobei die Sprühnebelvorrichtung (1) wenigstens eine Sprühnebeleinheit (2) aufweist,
wobei die Sprühnebeleinheit (2)
- wenigstens einen Druckleitungsanschluss für eine Druckleitung (3) zum Verbinden mit einer Fluidzufuhreinrichtung aufweist, und
- wenigstens eine Düse (4) mit einem Düsenkopf (5) und einem an diesem angeordneten Düsenausgang (6) aufweist, in welche wenigstens ein flüssiges und/ oder gasförmiges Fluid über den Druckleitungsanschluss zuführbar ist,
**dadurch gekennzeichnet, dass** die Sprühnebelvorrichtung (1) einen Rahmen (7) und einen an dem Rahmen hängend angebrachten Schutzvorhang (8) aufweist, so dass der Schutzvorhang (8) zumindest im Betrieb der Sprühnebelvorrichtung (1) von dem Rahmen (7) aus im Wesentlichen in Richtung des durch den Rahmen (7) fallenden Schüttguts (13) ausgerichtet ist und im Betrieb der Sprühnebelvorrichtung (1) das fallende Schüttgut (13) in dessen Umfangsrichtung vollständig oder zumindest teilweise umgibt und wobei der Schutzvorhang (8) aus einem flexiblen, biegsamen Material hergestellt ist.

3. Sprühnebelvorrichtung (1) gemäß Anspruch 1 oder 2, **dadurch gekennzeichnet, dass** der Schutzvorhang auf dessen dem fallenden Schüttgut (13) abgewandten Außenfläche (10) mindestens einen Kanal (11) ausbildet, wobei in dem Kanal (11) zumindest eine Druckleitung (3) für die Versorgung der mindestens einen Düse (4) mit dem flüssigen und/ oder gasförmigen Fluid angeordnet ist.

4. Sprühnebelvorrichtung (1) gemäß Anspruch 1, 2 oder 3, **dadurch gekennzeichnet, dass** die Sprühnebeleinheit (2) derart in den Schutzvorhang (8) eingebaut ist, dass die Sprühnebeleinheit (2) allein von dem Schutzvorhang (8) getragen ist.

5. Sprühnebelvorrichtung (1) gemäß einem der vorherigen Ansprüche, **dadurch gekennzeichnet, dass** eine Hinterschneidung (12) in die Sprühnebeleinheit (2) derart eingearbeitet ist, dass die wenigstens eine Düse (4) in einem Winkel von kleiner als 90° zu der Ausrichtung des Schutzvorhangs (8) ausgerichtet ist, so dass das fallende Schüttgut (13) von der wenigstens einen Düse (4) in Bezug auf das fallende Schüttgut (13) schräg von oben besprühbar ist.

6. Sprühnebelvorrichtung (1) gemäß einem der vorherigen Ansprüche, **dadurch gekennzeichnet, dass**
die wenigstens eine Düse (4) derart in die Sprühnebeleinheit (2) eingebaut ist, dass die Düse (4) im Wesentlichen außerhalb des von dem Schutzvorhang (8) umfassten Volumens angeordnet ist und sich lediglich der Düsenkopf (5) mit dem daran angeordneten Düsenausgang (6) innerhalb des von dem Schutzvorhang (8) umfassten Volumens befindet oder der an dem Düsenkopf (5) angeordnete Düsenausgang (6) bündig an der dem fallenden Schüttgut (13) zugewandten Innenfläche des Schutzvorhangs (8) anliegt, und/oder
die wenigstens eine Düse (4) der Sprühnebeleinheit (2) als Mischdüse (4) ausgebildet ist, in welche sowohl ein flüssiges als auch gasförmiges Fluid zuführbar ist, welche in der Mischdüse (4) miteinander mischbar sind.

7. Sprühnebelvorrichtung (1) gemäß einem der vorherigen Ansprüche, **dadurch gekennzeichnet, dass** die Sprühnebeleinheit (2) eine Vielzahl von Düsen (4) aufweist, welche in Richtung quer zur Ausrichtung des Schutzvorhangs (8) und/oder zumindest teilweise entlang der Längsrichtung (L) der Ausrichtung Schutzvorhangs (8) in Abständen zueinander angeordnet sind.

8. Sprühnebelvorrichtung (1) gemäß einem der vorherigen Ansprüche, **dadurch gekennzeichnet, dass** der Rahmen (7), an dem der Schutzvorhang (8) hängend angebracht ist, ein im Wesentlichen rechteckiger Metallrahmen (7) ist und der Schutzvorhang (8) im Betrieb der Sprühnebelvorrichtung (1) das fallende Schüttgut (13) in dessen Umfangsrichtung vollständig umgibt, so dass der Schutzvorhang (8) im Wesentlichen in Form eines Mantels eines Quaders mit vier rechteckigen Seitenflächen um das fallende Schüttgut (13) herum angeordnet ist.

9. Sprühnebelvorrichtung (1) gemäß Anspruch 8, **dadurch gekennzeichnet, dass** die Sprühnebeleinheit (2) eine Vielzahl von Düsen (4) aufweist, welche in Richtung quer zur Ausrichtung des Schutzvorhangs (8) zumindest entlang einer der rechteckigen vier Seitenflächen des Schutzvorhangs (8) in regelmäßigen Abständen zueinander angeordnet sind.

10. Sprühnebelvorrichtung (1) gemäß einem der vorherigen Ansprüche, **dadurch gekennzeichnet, dass** der Schutzvorhang (8) mehrere lamellenartige, der Länge nach nebeneinander hängend angeordnete und nicht oder zumindest nicht fest miteinander verbundene Streifen (9) umfasst, wobei die lamellenartigen Streifen (9) zumindest im Betrieb der Sprühnebelvorrichtung (1) in ihrer Längsrichtung (L) im Wesentlichen in Richtung des fallenden Schüttguts (13) ausgerichtet sind.

11. Sprühnebelvorrichtung (1) gemäß Anspruch 10, wobei die Sprühnebeleinheit (2) derart in den Schutzvorhang (8) eingebaut ist, dass sie an einem solchen lamellenartigen Streifen (9) eingebaut ist.

12. Sprühnebelvorrichtung (1) gemäß Anspruch 10 oder 11, **dadurch gekennzeichnet, dass** die lamellenartigen Streifen (9) in einer in ihrer Längsrichtung (L) nacheinander folgenden ersten (R1) und zweiten Reihe (R2) mit einem Abstand zwischen der ersten (R1) und der zweiten Reihe (R2) jeweils der Länge nach nebeneinander angeordnet sind und derart ausgestaltet sind, dass sie im Betrieb der Sprühnebelvorrichtung (1) das fallende Schüttgut (13) in dessen Umfangsrichtung vollständig oder zumindest teilweise umgeben,
wobei die Sprühnebeleinheit (2) derart in den Schutzvorhang (8) eingebaut ist, dass sie in dem Abstand zwischen der ersten (R1) und der zweiten Reihe (R2) der lamellenartigen Streifen (9) angeordnet ist und mit jeweils einem in Längsrichtung (L) der jeweiligen lamellenartigen Streifen (9) angeordneten Ende verbunden ist.

13. Sprühnebelvorrichtung (1) gemäß Anspruch 10, 11 oder 12, **dadurch gekennzeichnet, dass** die lamellenartigen Streifen (9) jeweils eine dem fallenden Schüttgut (13) abgewandte Außenfläche (10) aufweisen, an welcher die lamellenartigen Streifen (9) jeweils mindestens einen Kanal (11) ausbilden oder an welcher jeweils mindestens ein Kanal (11) ausgebildet ist, wobei in dem Kanal (11) zumindest eine Druckleitung (3) für die Versorgung der mindestens einen Düse (4) mit dem flüssigen und/ oder gasförmigen Fluid angeordnet ist.

14. Sprühnebelvorrichtung (1) gemäß Anspruch 10, 11, 12 oder 13, **dadurch gekennzeichnet, dass** die lamellenartigen Streifen (9) jeweils ein Stromkabel, welches vorzugsweise in die lamellenartigen Streifen integriert ist, aufweisen und/ oder die mindestens eine Düse (4) eine Schutzabdeckung zum zumindest teilweisen Abdecken der Düse (4) aufweist, wobei die Schutzabdeckung vorzugsweise thermisch isolierend ausgestaltet ist.

15. Sprühnebelvorrichtung (1) gemäß einem der vorherigen Ansprüche, **dadurch gekennzeichnet, dass** der Schutzvorhang (8) im Wesentlichen in Richtung des fallenden Schüttguts (13) eine Länge von mindestens 100 cm aufweist und/oder die lamellenartigen Streifen (9) jeweils eine Länge von mindestens 30 cm und/oder eine Breite von mindestens 20 cm aufweisen.
